# FASCICULE DE BREVET EUROPEEN

(11) **EP 0 519 794 B1**
(45) Date de publication et mention de la délivrance du brevet: **28.09.1994**
(21) Numéro de dépôt: 92401650.4
(22) Date de dépôt: 15.06.1992
(51) Int. Cl.: F17C 13/02, G01F 23/00, F17C 5/02

(54) **Dispositif de commande d'emplissage, et d'arrêt automatique à un niveau déterminé, de réservoirs de gaz de pétrole liquéfié (GPL)**
Füllregelungs- und automatische Füllabbruchvorrichtung auf einem gewähltes Niveau für Flüssiggas-(LPG)-Behälter
Controlling device for filling and automatic stopping at a pre-determined level for liquified petroleum gas (LPG) tanks

(30) Priorité: 17.06.1991 FR 9107366
(43) Date de publication de la demande: 23.12.1992
(73) Titulaire: TOTALGAZ, 92800 Puteaux (FR)
(72) Inventeur: Boyer, Jean-Louis, F-91170 Viry-Chatillon (FR); Lartigue, Pierre, F-60490 Ressons-Sur-Matz (FR); Pacaud, Gaston, F-60200 Compiegne (FR); Philis, Pierre, F-92250 La Garenne-Colombes (FR)
(74) Mandataire: Jolly, Jean-Pierre

(56) Documents cités:
- BE-A- 700 850
- FR-A- 2 527 804
- FR-A- 2 645 621
- US-A- 3 363 641

## Description

La présente invention concerne un dispositif de commande d'emplissage et d'arrêt automatique, à un niveau déterminé, à partir de camions-citernes, de réservoirs de gaz de pétrole liquéfié (en abrégé, G.P.L.).

On sait que l'utilisation du G.P.L, comme énergie stockable, pour les applications de chauffage à usages domestique, agricole ou industriel, connaît un développement important, du fait de sa propreté de combustion. Cet essor a entraîné l'installation de nombreux réservoirs de stockage de G.P.L., équipés de moyens de remplis sage à partir de camions-citerne munis d'une pompe.

Le stockage sous forme liquide du G.P.L., à la température ambiante, s'accompagne d' un ciel gazeux dans le réservoir au-dessus du liquide, une pression d'équilibre liquide-gaz s'établissant dans ce réservoir en fonction de la température. Le volume minimal de ce ciel gazeux est imposé par les réglementations en vigueur dans les différents pays et c'est ainsi qu'en France, le remplissage du réservoir ne doit pas dépasser 85 % de son volume interne aux températures normales, le ciel gazeux devant encore représenter 3 % de ce volume à 50° C.

Actuellement, pour contrôler l'emplissage d'un réservoir, le chauffeur livreur de G.P.L a à sa disposition deux jauges, dont l'une lui permet de mesurer en continu le niveau du G.P.L dans le réservoir et l'autre l'informe de ce que le niveau de liquide a atteint le niveau maximum autorisé. Cette dernière jauge est appelée jauge point haut. Elle comprend généralement un simple tube, qui plonge dans le réservoir jusqu'au niveau imposé.

Ce tube est mis en communication avec un trou d'évent par l'intermédiaire d'un dispositif d'obturation qui peut être une simple vis pourvue d'une garniture d'étanchéité. Cet évent permet l'échappement de G.P.L gazeux et la visualisation de l'apparition du G.P.L en phase liquide lorsque le niveau limite imposé est atteint. Le chauffeur livreur interrompt alors l'emplissage du réservoir. Cette opération dépend donc entièrement d'un opérateur humain, qui peut être sujet à d'éventuelles défaillances.

Pour remédier à cet inconvénient, on a déjà proposé d'utiliser des systèmes d'asservissement du dispositif d'emplissage du réservoir, en vue d'interrompre automatiquement cet emplissage dès que le niveau limite est atteint, sans intervention humaine d'un opérateur.

C'est ainsi que l'on a proposé d'installer dans les réservoirs des systèmes électriques sensibles, qui détectent la montée du liquide.

On a aussi proposé de disposer dans les réservoirs des systèmes optiques, utilisant par exemple un prisme à réflexion totale, qui renvoie une lumière incidente et permet de déterminer si le prisme est en contact avec la phase gazeuse ou avec la phase liquide.

US-A-3 363 641 décrit une vanne spécifiquement destinée à commander l'emplissage de réservoirs de gaz de pétrole liquéfié (G.P.L.) et incorporant un agencement particulier associé à un tube "jauge point haut" qui en assure la fermeture automatique en présence de la phase liquide : la détection s'effectue en exploitant la différence de pression dans une enceinte mise à l'air libre par un échappement, du fait des différences de viscosité respectives des phases gazeuse ou liquide du G.P.L.

Tous ces moyens de contrôle du niveau d'emplissage du réservoir nécessitent toutefois l'installation de systèmes spécifiques à l'intérieur du réservoir, et leur mise en place sur les réservoirs existants nécessite le vidage de ceux-ci,ce qui constitue une opération très onéreuse.

La présente invention vise à remédier à cet inconvénient, en proposant un système de contrôle du niveau d'emplissage des réservoirs de G.P.L. et de commande d'arrêt d'emplissage de ceux-ci, qui peut être adapté facilement aux réservoirs existants sans intervention à l'intérieur.

Un but de l'invention est donc de proposer un dispositif de commande d'emplissage jusqu'à un niveau déterminé, en particulier à partir de camions-citernes, de réservoirs de gaz de pétrole liquéfié, qui puisse être adapté sur les réservoirs existants, en utilisant les jauges point haut dont ils sont équipés, sans nécessiter le vidage de ces réservoirs.

Un autre but de l'invention est de proposer un tel dispositif, qui commande automatiquement l'interruption de l'emplissage d'un réservoir en G.P.L. lorsque le niveau limite imposé est atteint.

Un but de l'invention est également de proposer un dispositif de ce type qui puisse être installé à demeure sur les réservoirs de G.P.L., ou qui soit amovible et puisse être mis en place seulement au moment de l'emplissage par le chauffeur-livreur de G.P.L..

L'invention a enfin pour but de proposer un dispositif d'un tel type qui soit peu coûteux et dont le fonctionnement soit d'une grande sécurité.

A cet effet, l'invention a pour objet un dispositif de commande d'emplissage et d'arrêt automatique à un niveau déterminé d'un réservoir de gaz de pétrole liquéfié, comprenant un tube plongeur, apte à être introduit dans le réservoir jusqu'au niveau maximal de remplissage imposé, une chambre cylindrique communiquant avec l'intérieur du tube plongeur et débouchant par un orifice dans une chambre d'expansion munie d'un évent de mise à l'atmosphère, un noyau cylindrique, monté coulissant dans la chambre cylindrique et présentant un diamètre externe identique au diamètre interne de la chambre, ce dispositif étant caractérisé en ce que le noyau comporte, sur sa partie externe, au moins une rainure longitudinale s'étendant sur une partie de la longueur du noyau à partir de son extrémité la plus proche du tube plongeur, cette rainure étant apte à mettre en communication l'intérieur du tube et la chambre d'expansion, après déplacement du noyau d'une longueur prédéterminée en direction de la chambre d'expansion, et en ce que dans la chambre d'expansion sont prévus un moyen élastique de rappel, à l'encontre duquel se déplace le noyau, et une sonde de mesure de température, permettant la détection de la vaporisation de gaz liquéfié, des moyens asservis à cette sonde étant aptes à agir sur un signal de commande à distance pour provoquer l'interruption d'emplissage du réservoir, lorsque la température mesurée devient inférieure à la température ambiante.

Au début de l'emplissage, le dispositif d'obturation étant en position ouverte, le G.P.L. gazeux sortant du réservoir exercera sa pression sur l'extrémité du noyau, par l'intermédiaire du tube plongeur, et le noyau sera repoussé dans le cylindre, à l'encontre du moyen de rappel élastique qui le sollicite, jusqu'à ce que la rainure externe de ce noyau communique avec la chambre d'expansion et, par l'évent, avec l'atmosphère. La rainure sera disposée de façon à assurer l'injection de G.P.L. dans la chambre d'expansion en direction de la sonde de mesure de température.

Lorsque la phase liquide du G.P.L. atteindra dans le réservoir le niveau de l'extrémité libre du tube plongeur, elle s'élèvera dans le tube sous la pression interne du réservoir et atteindra ainsi la chambre d'expansion, où elle se vaporisera en absorbant des calories et en provoquant une brutale chute de température, qu'enregistrera la sonde de mesure de température, laquelle provoquera l'arrêt de l'emplissage du réservoir. En fait, dans la pratique, on mesure l'écart entre la température mesurée par cette sonde et la température ambiante mesurée par une sonde de référence. Cet écart varie en fonction de la température ambiante et de la composition du G.P.L. utilisé, comme il est connu de l'homme du métier.

Avantageusement, le moyen de rappel élastique sollicitera en direction de l'orifice de communication entre la chambre cylindrique et la chambre d'expansion un piston rigidement solidaire du noyau, disposé dans ladite chambre d'expansion.

Le dispositif conforme à l'invention comportera, de préférence, un moyen de détection de la position du noyau, n'autorisant le remplissage de la cuve que lorsque le noyau sera dans une position caractéristique du passage d'un fluide dans la chambre d'expansion. Ce dispositif pourra être de tout type connu en soi. Avantageusement, on utilisera un faisceau optique, dont un organe solidaire du noyau autorisera ou interrompra le passage du flux, suivant la position du noyau, les moyens de commande du système d'emplissage étant asservis à un système de détection de ce faisceau lumineux. De préférence, l'emplissage de G.P.L. ne sera autorisé que si le faisceau lumineux n'est pas interrompu, afin que le système fonctionne en sécurité positive.

Lorsqu'un réservoir est complètement vide, on risque cependant qu'aucune pression ne sollicite le noyau au début du remplissage, ce qui interdirait l'alimentation en G.P.L. du réservoir. Pour remédier à cet inconvénient, des moyens de temporisation seront avantageusement associés aux moyens de commande du système de remplissage, en vue d'autoriser l'alimentation du réservoir au début du remplissage, pendant une durée déterminée, même si le noyau ne s'est pas déplacé.

Le tube plongeur du dispositif conforme à l'invention pourra naturellement être constitué, pour les réservoirs déjà installés, par le tube de la jauge point haut existante, de sorte que le dispositif pourra aisément être mis en place sur ces réservoirs.

Les moyens asservis aux sondes de mesure de température et aptes à émettre un signal de commande de l'interruption du remplissage du réservoir émettront de préférence un signal hertzien, qui sera reçu par des moyens de réception appropriés portés par le camionciterne de livraison, le moyen de remplissage du réservoir étant lui-même asservi à ces moyens de réception.

Les dessins annexés illustrent une telle forme de mise en oeuvre de l'invention. Sur ces dessins :
La figure 1 est une vue schématique illustrant l'ensemble du processus ;

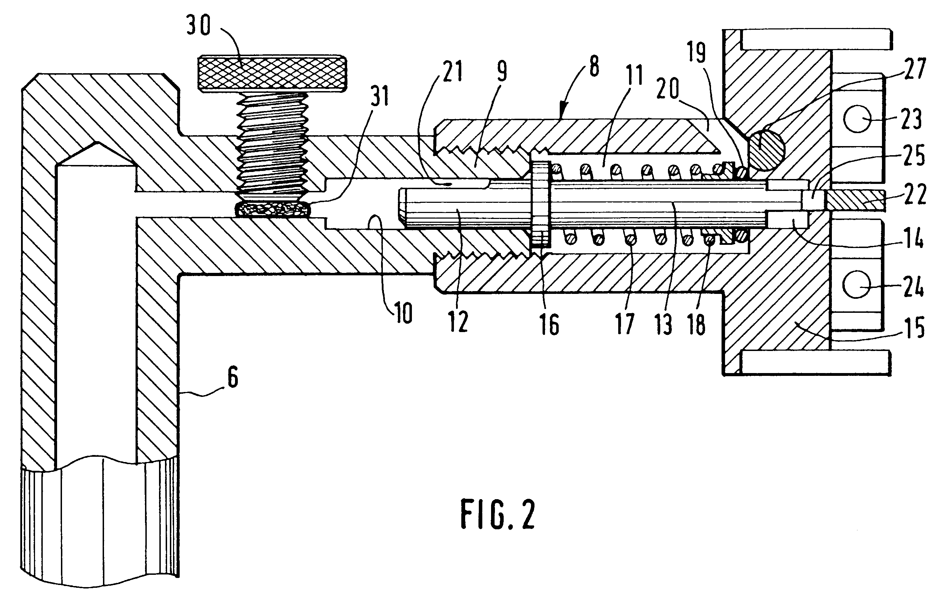

La figure 2 est une vue de détail du capteur d'emplissage du dispositif conforme à l'invention.

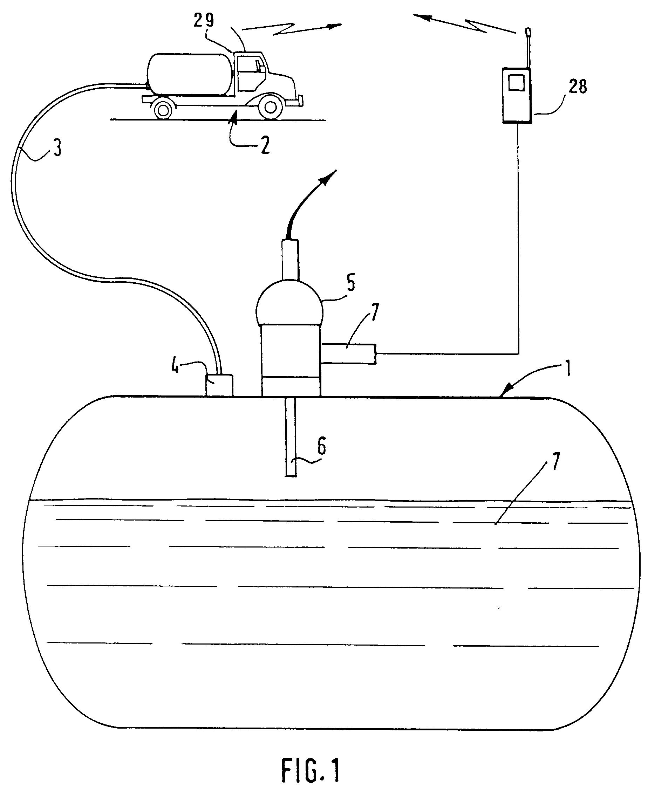

Comme on le voit sur la figure 1, l'invention se rapporte à l'emplissage en gaz de pétrole liquéfié d'un réservoir 1 à partir d'un camion 2, dont le flexible 3 de livraison est connecté à un clapet 4 de remplissage du réservoir 1. Ce réservoir est équipé de façon usuelle d'un détendeur 5, non représenté en détail et d'un ensemble appelé polyvanne, à partir duquel un tube 6 de faible diamètre plonge à l'intérieur du réservoir jusqu'au niveau maximum que doit occuper la phase liquide du G.P.L. dans le réservoir, afin de conserver au-dessus de lui un volume de ciel gazeux conforme aux réglementations en vigueur. Lorsque le niveau du G.P.L. atteint l'extrémité inférieure du tube 6, qui constitue une jauge point haut, le G.P.L. liquide monte dans ce tube, sous la pression interne du réservoir, et est évacué latéralement.

Lorsque l'opérateur constate l'apparition de G.P.L. liquide à la sortie du tube 6, il peut donc arrêter la livraison du G.P.L. à partir du camion, mais cette opération dépend alors d'un facteur humain , qui peut être défaillant.

Pour remédier à cet inconvénient, l'invention propose d'associer à la sortie du tube 6 des réservoirs existants, et non à l'intérieur de ceux-ci, un dispositif 7, communiquant avec le tube 6 et commandant l'emplissage du réservoir et, automatiquement, sans intervention humaine, l'arrêt de cet emplissage lorsque le niveau du G.P.L. liquide atteint l'extrémité inférieure de ce tube 6.

Le dispositif 7 comprend un tube 8, connecté à la sortie du tube 6, par l'intermédiaire d'un raccord approprié 9, auquel il est vissé. Dans ce raccord est percé un alésage axial 10, qui communique avec l'intérieur du tube 6 et qui débouche dans la partie creuse du tube 8, laquelle constitue une chambre d'expansion 11.

De façon connue, un dispositif d'obturation à vis 30 et à garniture 31 permet de fermer le passage lorsque l'on n'a pas l'usage de la jauge point haut.

Dans l'alésage 10 de l'élément 9 est monté coulissant un noyau cylindrique 12 formant piston, de forme et de dimension transversale correspondantes à celles de l'alésage 10. Ce noyau 12 se prolonge par une partie 13 dans la chambre d'expansion 11 et l'extrémité libre de cette partie 13 est montée coulissante dans un évidement 14 de profil complémentaire d'une bride 15 faisant corps avec le tube 8. Un piston 16, solidaire de la partie 13, prend appui contre l'extrémité libre de l'appendice 9, sous la sollicitation d'un ressort 17, coaxial à la partie 13, qui prend lui-même appui, à son extrémité opposée, contre la bride 15, éventuellement par l'intermédiaire d'une butée 18, montée coulissante sur la partie 13, et d'un joint 19.

La chambre d'expansion 11 communique avec l'atmosphère ambiante par un évent 20, contigu à la bride 15. Dans celle-ci est logée, à la base de l'évent 20, une sonde de mesure de température 27.

Une rainure 21, parallèle à l'axe du noyau 12, s'étend, à partir de l'extrémité de celui-ci contiguë à l'évidement du tube 6, sur une partie de la longueur de ce noyau.

L'extrémité opposée de la partie 13 se prolonge par un appendice 22, qui fait saillie à l'extérieur de la bride 15, à travers une ouverture de celle-ci, entre un émetteur 23 et un récepteur 24 d'un faisceau lumineux. L'appendice 22 est percé d'une ouverture 25, qui, lorsque le piston 16 est appliqué contre l'extrémité libre de la partie 9, n'est pas disposée en regard du faisceau lumineux, lequel est alors occulté par l'appendice 22. En déplaçant le noyau 12, l'ouverture 25 peut toutefois être amenée en regard du faisceau lumineux, qui passe alors librement en direction du récepteur 24.

Le récepteur 24 et la sonde de température 27 sont connectés, par l'intermédiaire d'un dispositif électronique dont la fonction sera précisée ci-après, à un système de commande à distance du dispositif de pompage du G.P.L. à partir du camion 2. Ce système de commande à distance peut être de tout type connu, mais, comme représenté sur la figure 1, on utilisera avantageusement un émetteur-récepteur 28 d'ondes hertziennes, associé à un émetteur-récepteur 29 porté par le camion.

Le fonctionnement du dispositif conforme à l'invention va maintenant être décrit.

Lorsque débute l'emplissage du réservoir 1, le G.P.L. sous pression présent dans ce réservoir repousse le noyau 12, passe dans la chambre 11 et est rejeté à l'atmosphère par l'évent 20. Le noyau 12, repoussé par le G.P.L., entraîne simultanément l'appendice 22 et amène l'ouverture 25 en regard du faisceau lumineux émis par l'émetteur 23. Ce faisceau est reçu par le récepteur 24, qui envoie un signal à un système électronique associé, en vue d'autoriser l'emplissage du réservoir et de commander l'alimentation en G.P.L. de celui-ci à partir du camion. Le G.P.L. passe par la rainure 21 dans la chambre 11 et, de là, est évacué à l'atmosphère par l'évent 20. La rainure 21 a des dimensions telles qu'elle fait fonction d'injecteur du G.P.L. dans la chambre 11. L'appendice 22 la maintient orientée en direction de la sonde 27 de mesure de température.

Pour le cas où le réservoir 1 serait complètement vide et où il n'y aurait aucune pression, le circuit électronique comprend une temporisation autorisant l'alimentation en G.P.L. pendant quelques secondes au début du remplissage, même si le signal lumineux est occulté par l'appendice 22. Le G.P.L. ainsi délivré dans le réservoir se vaporise alors partiellement en formant un ciel gazeux sous pression, apte à repousser le noyau 12.

Lorsque le niveau du G.P.L. liquide, dans le réservoir 1, atteint la limite haute préfixée, à savoir l'extrémité inférieure du tube 6, il s'élève dans celui-ci sous l'effet de la pression interne du réservoir, passe par la rainure 21 du noyau 12 dans la chambre 11, où il se vaporise en passant à l'atmosphère par l'évent 20. La vaporisation et la détente du G.P.L. liquide au niveau de cet évent provoquent une brutale chute de température, qui est enregistrée par la sonde de température 27 et comparée à la température ambiante, mesurée par une sonde non représentée. Cet écart de température est analysé par le circuit électronique (non représenté), qui émet un signal de commande à distance pour interrompre l'alimentation du réservoir en G.P.L.

Cette chaîne d'information est à sécurité positive et la liaison radio se fait selon un protocole prédéterminé, de manière à s'affranchir du risque de déclenchement intempestif en raison de parasites ou d'interférences. Le protocole utilisé fait appel à un dialogue entre le dispositif conforme à l'invention, associé au réservoir et celui associé au camion. En particulier, tous les circuits de commande de la pompe du camion sont maintenus hors service tant qu'un premier échange question-réponse entre le système associé au réservoir et celui associé au camion n'a pas commandé leur mise en veille. Il faut alors que l'opérateur qui a initié cette mise en veille commute le système associé au réservoir, par exemple en changeant de canal radio, pour que le dialogue reprenne entre les deux systèmes, en commandant alors la pompe du camion. Toute interruption de ce dialogue, soit délibérée (intervention du chauffeur-livreur), soit automatique (détection de l'apparition de phase liquide par le capteur objet de l'invention), soit enfin fortuite (panne de l'un des ensembles de la liaison radio, ou casse en tombant du système associé au réservoir, ou écran empêchant la liaison radio...), provoque l'arrêt de la pompe du camion.

L'invention apporte donc un système simple, fiable et peu coûteux, pour limiter le remplissage en G.P.L. d'un réservoir à son niveau maximal autorisé, qui peut être installé à l'extérieur du réservoir, sans modification de celui-ci, soit à demeure, soit de façon amovible, par l'opérateur du remplissage.

## Revendications

1. Dispositif de commande d'emplissage et d'arrêt automatique à un niveau déterminé d'un réservoir (1) de gaz de pétrole liquéfié, comprenant un tube plongeur (6), apte à être introduit dans le réservoir jusqu'au niveau maximal de remplissage imposé, une chambre cylindrique (10) communiquant avec l'intérieur du tube plongeur et débouchant par un orifice dans une chambre d'expansion (11) munie d'un évent (20) de mise à l'atmosphère, un noyau cylindrique (12), monté coulissant dans la chambre cylindrique (10) et présentant un diamètre externe identique au diamètre interne de la chambre (10), ce dispositif étant caractérisé en ce que le noyau (12) comporte, sur sa partie externe, au moins une rainure longitudinale (21) s'étendant sur une partie de la longueur du noyau à partir de son extrémité la plus proche du tube plongeur (6), cette rainure étant apte à mettre en communication l'intérieur du tube (6) et la chambre d'expansion (11), après déplacement du noyau d'une longueur prédéterminée en direction de la chambre d'expansion, et en ce que dans la chambre d'expansion (11) sont prévus un moyen élastique de rappel (17), à l'encontre duquel se déplace le noyau (12), et une sonde (27) de mesure de température, permettant la détection de la vaporisation de gaz liquéfié, des moyens asservis à cette sonde étant aptes à agir sur un signal de commande à distance pour provoquer l'interruption d'emplissage du réservoir, lorsque la température mesurée devient inférieure à la température ambiante.

2. Dispositif selon la revendication 1, caractérisé en ce qu'il comporte un moyen de détection de la position du noyau (12) n'autorisant la commande d'emplissage du réservoir (1) que lorsque le noyau (12) est dans une position caractéristique du passage d'un fluide dans la chambre d'expansion.

3. Dispositif selon la revendication 2, caractérisé en ce que le moyen de détection de la position du noyau (12) comprend un moyen (23) d'émission d'un faisceau optique, un moyen (24) de réception de ce faisceau, et un organe (22) solidaire du moyen (12), cet organe (22) autorisant ou interrompant le passage du faisceau optique, suivant la position du noyau (12), les moyens de commande du remplissage du réservoir (1) étant asservis au moyen (24) de réception du faisceau lumineux.

4. Dispositif selon la revendication 3, caractérisé en ce qu'il comprend des moyens de temporisation associés au moyen (24) de réception du faisceau lumineux, en vue d'autoriser l'alimentation du réservoir (1) au début du remplissage, même si le moyen (24) de réception du faisceau lumineux n'autorise pas ce remplissage.

5. Dispositif selon l'une des revendications 1 à 4, caractérisé en ce que le tube plongeur (6) est consitué par une jauge point haut préexistant sur le réservoir (1).

6. Dispositif selon l'une des revendications 1 à 5, caractérisé en ce que les moyens asservis à la sonde de mesure de température (27) et aptes à émettre un signal de commande à distance d'emplissage et d'interruption d'emplissage du réservoir émettent un signal hertzien et en ce que le dispositif (2) de livraison comporte des moyens de réception de ce signal, auxquels est asservi le moyen de remplissage du réservoir.

7. Dispositif selon l'une des revendications 1 à 6, caractérisé par l'utilisation d'un protocole selon lequel l'actionnement du moyen de livraison (2) par un opérateur requiert un dialogue entre ce moyen de livraison et le dispositif conforme à l'invention, préalablement à l'intervention dans un délai déterminé de ce dernier.

## Claims

1. A device for controlling the filling and automatic shutting-off at a predetermined level of a tank (1) for liquefied petroleum gas, comprising a dip tube (6) adapted to be introduced into the tank up to the maximum level set, a cylindrical chamber (10) communicating with the inside of the dip tube and discharging through an orifice into an expansion chamber (11) provided with a vent (20) to the atmosphere, a cylindrical stem (12) mounted to slide in the cylindrical chamber (10) and having an outer diameter which is identical to the inner diameter of the chamber (10), said device being characterised in that the stem (12) comprises, on its outer portion, at least one longitudinal groove (21) extending over part of the length of the stem starting from its end nearest the dip tube (6), said groove being adapted to communicate the inside of the tube (6) with the expansion chamber (11), after displacement of the stem by a predetermined length in the direction of the expansion chamber, and in that in the expansion chamber (11) there are provided an elastic return means (17), against which the stem (12) is displaced, a temperature-measuring sensor (27) making it possible to detect the vaporisation of liquefied gas, and means under the control of said sensor adapted to act on a remote-control signal so as to effect the cutting-off of the filling of the tank when the temperature measured is lower than the ambient temperature.

2. A device according to claim 1, characterised in that it comprises a means for detecting the position of the stem (12), which only allows the operation of filling the tank (1) when the stem (12) is in a specific position for the passage of a fluid into the expansion chamber.

3. A device according to claim 2, characterised in that the means for detecting the position of the stem (12) comprises a means (23) for transmitting an optical beam, a means (24) for receiving this beam and a member (22) attached to the means (12), said member (22) allowing or interrupting the passage of the optical beam, depending on the position of the stem (12), the means for controlling the filling of the tank (1) being under the control of the means (24) for receiving the light beam.

4. A device according to claim 3, characterised in that it comprises time-delay means associated with the means (24) for receiving the light beam with a view to allowing the supply to the tank (1) at the start of filling, even if the means (24) for receiving the light beam does not allow said filling.

5. A device according to any one of claims 1 to 4, characterised in that the dip tube (6) comprises a gauge for a pre-existing high point in the tank (1).

6. A device according to any one of claims 1 to 5, characterised in that the means, which are under the control of the temperature-measuring sensor (27) and which are adapted to transmit a remote control signal for the filling and interruption of filling of the tank, transmit a Hertzian signal, and in that a delivery appliance (2) comprises means for receiving this signal which are under the control of the means for filling the tank.

7. A device according to any one of claims 1 to 6, characterised by the use of a protocol, according to which the operation of the delivery appliance (2) by an operator necessitates a dialogue between said delivery appliance and the device in accordance with the invention, within a time delay determined by the latter and prior to any intervention.

## Patentansprüche

1. Vorrichtung zum Steuern des Füllens eines Flüssiggasbehälters (1) und des automatischen Abbruchs des Füllens bei einem bestimmten Niveau, welche
ein Tauchrohr (6), das bis zum vorgegebenen maximalen Füllniveau in den Behälter eingeführt werden kann,
eine zylindrische Kammer (10), die mit dem Inneren des Tauchrohrs kommuniziert und über eine Öffnung in eine Expansionskammer (11) mündet, welche mit einem in die Atmosphäre führenden Entlüftungskanal (20) versehen ist, und
einen zylindrischen Kern (12), der in der zylindrischen Kammer (10) gleitend gelagert ist und dessen Außendurchmesser mit dem Innendurchmesser der Kammer (10) identisch ist,
aufweist, dadurch **gekennzeichnet,** daß
der Kern (12) mindestens eine Längsnut (21) auf seinem äußeren Teil aufweist, welche sich von dem dem Tauchrohr (6) benachbarten Ende des Kerns über einen Teil seiner Länge erstreckt und das Innere des Tauchrohres (6) mit der Expansionskammer (11) in Verbindung setzen kann, wenn der Kern sich um eine vorbestimmte Strecke auf die Expansionskammer zu verschoben hat, und
in der Expansionskammer (11) ein elastisches Rückholmittel (17), gegen dessen Wirkung sich der Kern (12) verschiebt, und ein Temperaturmeßfühler (27) vorgesehen sind, welcher das Verdampfen von Flüssiggas festzustellen erlaubt, wobei dem Temperaturmeßfühler unterworfene Mittel auf ein Fernsteuersignal einwirken können, um die Unterbrechung des Füllens des Behälters zu bewirken, wenn die gemessene Temperatur niedriger als die Umgebungstemperatur wird.

2. Vorrichtung nach Anspruch 1, **gekennzeichnet** durch ein Mittel zur Feststellung der Position des Kerns (12), welches das Steuern des Füllens des Behälters (1) nur gestattet, wenn der Kern (12) eine charakteristische Position einnimmt, um ein Strömungsmittel in die Expansionskammer durchzulassen.

3. Vorrichtung nach Anspruch 2, dadurch **gekennzeichnet,** daß das Mittel zur Feststellung der Position des Kerns (12) ein Mittel (23) zum Senden eines optischen Strahls, ein Mittel (24) zum Empfanges des Strahls und ein mit dem Kern (12) verbundenes Organ umfaßt, welches den optischen Strahl je nach der Position des Kerns (12) durchläßt oder nicht durchläßt, wobei die Mittel zum Steuern des Füllens des Behälters (1) dem Mittel (24) zum Empfangen des Lichtstrahls unterworfen sind.

4. Vorrichtung nach Anspruch 3, dadurch **gekennzeichnet,** daß dem Mittel (24) zum Empfangen des Lichtstrahls Verzögerungsmittel zugeordnet sind, um die Beschickung des Behälters (1) zu Beginn des Füllens auch dann zu gestatten, wenn das Mittel (24) zum Empfangen des Lichtstrahls das Füllen nicht gestattet.

5. Vorrichtung nach einem der Ansprüche 1 bis 4, dadurch **gekennzeichnet,** daß das Tauchrohr (6) von einer am Behälter (1) schon vorhandenen "Hochpunktlehre" gebildet ist.

6. Vorrichtung nach einem der Ansprüche 1 bis 5, dadurch **gekennzeichnet,** daß die dem Temperaturmeßfühler (27) unterworfenen Mittel, welche ein Fernsteuersignal zum Füllen und zur Unterbrechung des Füllens des Behälters senden können, ein Hertzsches Signal senden, und daß die Liefervorrichtung (2) Mittel zum Empfangen dieses Signals aufweist, denen das Mittel zum Füllen des Behälters unterworfen ist.

7. Vorrichtung nach einem der Ansprüche 1 bis 6, **gekennzeichnet** durch die Anwendung eines Protokolls, nach welchem die Be tätigung des Liefermittels (2) durch eine Bedienungsperson einen Dialog zwischen dem Liefermittel und der erfindungsgemäßen Vorrichtung erfordert, und zwar vor dem Eingriff der letzteren in einer bestimmten Frist.
